(19)

Europäisches
Patentamt
European
Patent Office
Office européen
des brevets

(11)    EP 1 854 917 A1

(12)    **EUROPEAN PATENT APPLICATION**
published in accordance with Art. 158(3) EPC

(43) Date of publication:
**14.11.2007 Bulletin 2007/46**

(21) Application number: **06714970.8**

(22) Date of filing: **01.03.2006**

(51) Int Cl.:
*D06M 15/55* (2006.01)      *B60C 9/00* (2006.01)
*D01F 11/08* (2006.01)      *D02G 3/48* (2006.01)
*D06M 13/395* (2006.01)      *D06M 15/41* (2006.01)
*D06M 15/693* (2006.01)      *D06M 101/32* (2006.01)

(86) International application number:
**PCT/JP2006/303852**

(87) International publication number:
**WO 2006/093182 (08.09.2006 Gazette 2006/36)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **03.03.2005 JP 2005059087
05.07.2005 JP 2005196211
05.07.2005 JP 2005196212**

(71) Applicant: **Toyo Boseki Kabushiki Kaisha
Osaka-shi, Osaka 530-8230 (JP)**

(72) Inventors:
• **IMAOKA, Katsutoshi
Tsuruga-shi Fukui, 9148550 (JP)**
• **KOHASHI Masanao
Tsuruga-shi Fukui, 9148550 (JP)**

(74) Representative: **Müller-Boré & Partner
Patentanwälte
Grafinger Strasse 2
81671 München (DE)**

(54)    **REINFORCING POLYESTER CORD FOR RUBBERS AND PROCESS FOR PRODUCTION
THEREOF**

(57)    [Object] The present invention relates to a polyester cord for reinforcement of rubber where heat-resistant adhesive property when exposed to high temperature for long time in a state of being embedded in a rubber composition or under a high-temperature atmosphere is significantly improved, stiffness of the cord is made soft to such a level which is no problem in terms of practical use in view of anti-fatigue property and also of molding and processing property of the rubber-reinforced product and a high elastic modulus is available; and a method for manufacturing the same.

[Means to Solve] A method for the manufacture of a polyester cord for reinforcement of rubber, **characterized in that**, a polyester fiber material where an epoxy compound is previously applied in a stage of non-drawn yarn or drawn yarn or in a stage of twisted yarn cord so that an adhesively activated treatment is conducted is treated with a treating solution containing the three components of (A) an aqueous solution of blocked isocyanate, (B) a dispersion of epoxy resin and (C) resorcinol-formaldehyde-latex (RFL) mixed liquid by a single-stage treatment or a multi-stage treatment of two or more stages whereby adhesive property to rubber is endowed to said polyester fiber material.

[Figure 1]

test piece for a peeling strength test against adhesion
2) cord
3) peeled surface cut
2) cord
area (a)
area (b)
1) rubber for tire
peeling direction
25mm width and 33 cord pick

EP 1 854 917 A1

**Description**

Technical Field of the Invention

The present invention relates to a polyester cord for reinforcement of rubber where adhesive property to rubber is improved and, more particularly, a polyester cord for reinforcement of rubber where heat-resistant adhesive property when exposed to high temperature for long time in a state of being embedded in a rubber composition or under a high-temperature atmosphere is significantly improved, stiffness of the cord is made soft to such a level which is no problem in terms of practical use in view of anti-fatigue property and also of molding and processing property of the rubber-reinforced product and a high elastic modulus is available. The present invention also relates to a method for manufacturing the same.
The polyester cord for reinforcement of rubber prepared by the present invention is suitable for tire cord and particularly for tire cap ply cord used for an outer layer part of belt of radial tire.

Background Art

Although a polyester fiber represented by polyethylene terephthalate has excellent mechanical characteristics and dimensional stability, it has a disadvantage as compared with a Nylon fiber that adhesion property to rubber is poor or, particularly, lowering in adhesion property when exposed to high temperature for long time under the state of being embedded in a rubber composition is significant. The cause for the lowering of adhesion property in a rubber composition is said to be deterioration of a polyester fiber by action of amine and moisture in the rubber composition and, in order to solve the disadvantage, many proposals have been made already. For example, in Japanese Patent Laid-Open No. 51/070,394 A, there is a proposal for a method where a polyester fiber in which carboxyl terminal group amount is not more than 10 eq/$10^6$ g is subjected to a treatment with an epoxy compound, with a polyisocyanate compound and with an RFL but, since the treatment with a polyisocyanate is conducted in an organic solvent system and the treatment is by means of a three-step dipping, that is not practical.
In Japanese Patent Publication No. 60/031,950 B, there is a proposal for a method of manufacturing a polyester fiber material where lowering in adhesion property upon being exposed to high temperature for long time in rubber is little by conducting a treatment with a carrier-containing solution at least prior to the treatment with an adhesive but, although the effect is achieved in terms of heat-resistant adhesive property, there is a problem that strength and anti-fatigue property are deteriorated.
In Japanese Patent Laid-Open Nos. 2000/008,280 A and 2000/212,875 A, there is a proposal for a method of manufacturing a polyester fiber material for reinforcement of rubber where heat-resistant adhesive property upon exposure to high temperature for long time when embedded in a rubber composition is significantly improved without sacrificing the strength and anti-fatigue property by the treatment with a treating solution containing a carrier, an aqueous solution of blocked isocyanate, a dispersion of epoxy resin and a mixed solution of resorcinol, formaldehyde and latex. However, in the cord stiffness mentioned therein, although anti-fatigue property in the evaluation within a relatively short period is improved, fatigue of the cord still causes a problem in practical use and, in addition, because the cord is hard, there is a problem that molding and processing property of the reinforced rubber product becomes bad.
In the use as a tire cord, characteristics such as high strength, high elastic modulus, low shrinking rate, adhesive property and anti-fatigue property are demanded and fiber of a polyethylene terephthalate type has been a main stream of carcass ply cord for radial tire because of its superiority in terms of performance and cost. However, in recent years where the use for high-performance tires have diffused in view of safety and comfortableness, heat-resistant adhesive property is strongly demanded in cap ply cord used in the outer layer part of belt which is in a tendency of expansion of consumption and, therefore, Nylon 66 having an excellent adhesive property is a mainstream.
On the other hand however, since Nylon 66 basically has low elastic modulus, there are problems in tire uniformity and flat spots and, further, in a tire where durability at high speed driving is important, countermeasure such as an increase in cord pick is necessary and there is a disadvantage that weight of tire becomes heavy.
Against that, the use of fiber of a polyethylene terephthalate type having a high elastic modulus has been proposed but it is difficult to satisfy all of heat-resistant adhesive property, anti-fatigue property, etc. and it is the current status that a practically usable level has not been achieved yet (refer, for example, to Japanese Patent Laid-Open No. 59/124,407 A).

Brief Description of the Drawing

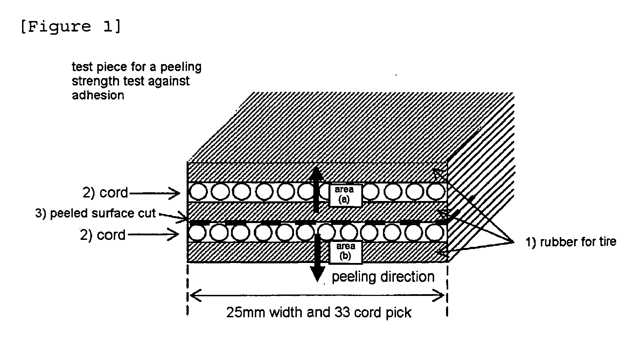

Fig. 1 is an oblique view of a test piece for a peeling strength test against adhesion which was conducted as an evaluation measure for heat-resistant adhesive property of the present invention.

Explanation of Reference Signs in Drawings

1:  rubber for tire
2:  polyester fiber cord
3:  peeled surface cut

Disclosure of the Invention

Problems that the Invention is to Solve

The present invention has been achieved where the problems in the prior art are background and an object of the present invention is to provide a polyester cord for reinforcement of rubber where heat-resistant adhesive property when exposed to high temperature for long time in a state of being embedded in a rubber composition or under a high-temperature atmosphere is significantly improved, stiffness of the cord is made soft to such a level which is no problem in terms of practical use in view of anti-fatigue property and also of molding and processing property of the rubber-reinforced product and a high elastic modulus is available. The present invention is also to provide a method for manufacturing the same.
The polyester cord for reinforcement of rubber prepared by the present invention is suitable for rubber composition and tire cord and particularly for a cap ply cord used in the outer layer part of belt of radial tire among pneumatic tires.

Means for Solving the Problems

As a result of intensive studies for solving the above-mentioned problem, the present invention has been at last achieved. Thus, the present invention has the following constitutions.
1. A method for the manufacture of a polyester cord for reinforcement of rubber, characterized in that, a polyester fiber material where an epoxy compound is previously applied in a stage of non-drawn yarn or drawn yarn or in a stage of twisted yarn cord so that an adhesively activated treatment is conducted is treated with a treating solution containing the three components of (A) an aqueous solution of blocked isocyanate, (B) a dispersion of epoxy resin and (C) resorcinol-formaldehyde-latex (RFL) mixed liquid by a single-stage treatment or a multi-stage treatment of two or more stages whereby adhesive property to rubber is endowed to said polyester fiber material.
2. The method for the manufacture of a polyester cord for reinforcement of rubber according to the above 1, wherein the ratio by weight of solids of blocked isocyanate/latex in the above treating solution is from 0.20/1 to 1/1.
3. The method for the manufacture of a polyester cord for reinforcement of rubber according to the above 1 or 2, wherein (A) aqueous solution of blocked isocyanate is an aqueous solution at least containing tri- or higher polyfunctional polymethylene polyphenyl isocyanate.
4. The method for the manufacture of a polyester cord for reinforcement of rubber according to any of the above 1 to 3, wherein, in the above (A) blocked isocyanate, a thermal dissociation temperature of the blocking agent component is 100°C to 200°C.
5. The method for the manufacture of a polyester cord for reinforcement of rubber according to any of the above 1 to 4, wherein a latex component in the above (C) resorcinol-formaldehyde-latex (RFL) mixed liquid contains three components of vinylpyridine, styrene and butadiene and they are compounded in such a composition rate (ratio by weight) that sum of the ratios of vinylpyridine and styrene is 25% to 55%, the ratio of vinylpyridine is 5% to 20% and the ratio of butadiene is 45% to 75%.
6. The method for the manufacture of a polyester cord for reinforcement of rubber according to any of the above 1 to 5, wherein the polyester fiber material is a fiber material where a polyethylene terephthalate fiber treated with an epoxy compound having di- or higher polyfunctional epoxy group in a spinning, drawing or after-treating step is used.
7. The method for the manufacture of a polyester cord for reinforcement of rubber according to any of the above 1 to 6, wherein, after said polyester fiber material is treated with a treating solution containing the three components of (A) an aqueous solution of blocked isocyanate, (B) a dispersion of epoxy resin and (C) a resorcinol-formaldehyde-latex (RFL) mixed liquid by a single-stage treatment or a multi-stage treatment of two or more stages, it is subjected to a thermal treatment under a normalizing tension adjusted to not less than 0.2 cN/dtex.
8. The method for the manufacture of a polyester cord for reinforcement of rubber according to the above 7, wherein the normalizing tension is not less than 0.3 cN/dtex.
9. The method for the manufacture of a polyester cord for reinforcement of rubber according to the above 7, wherein the normalizing tension is not less than 0.4 cN/dtex.
10. A rubber composit using the polyester cord for reinforcement of rubber manufactured by the method mentioned in any of the above 1 to 9.

11. A tire cap ply cord using the polyester cord for reinforcement of rubber manufactured by the method mentioned in any of the above 1 to 9.

12. A polyester cord for reinforcement of rubber manufactured by the method mentioned in any of the above 1 to 9 in which gurley type cord stiffness is 30 mN to 90 mN, rubber covering rate after the initial vulcanization in a peeling strength test against adhesion at ambient temperature is not less than 90% and rubber covering rate after over-vulcanization is not less than 80% in a peeling strength test against adhesion at ambient temperature.

13. A polyester cord for reinforcement of rubber manufactured by the method mentioned in any of the above 1 to 9 in which gurley type cord stiffness is 30 mN to 90 mN, rubber covering rate after the initial vulcanization in a peeling strength test against adhesion upon heating under the atmosphere of 150°C is not less than 90% and rubber covering rate after over-vulcanization is not less than 80% in a peeling strength test against adhesion upon heating under the atmosphere of 150°C.

14. The polyester cord for reinforcement of rubber according to the above 12 or 13, wherein the tenacity is not less than 4.5 cN/dtex and elongation upon loading of 2.0 cN/dtex is not more than 5.0%.

15. The polyester cord for reinforcement of rubber according to the above 14, wherein the elongation upon loading of 2.0 cN/dtex is not more than 4.0%.

16. The polyester cord for reinforcement of rubber according to the above 14, wherein the elongation upon loading of 2.0 cN/dtex is not more than 3.5%.

17. The polyester cord for reinforcement of rubber according to any of the above 12 to 16, wherein a twist coefficient K of the cord expressed by $K = T\sqrt{D}$ is not more than 2,500. Here T is cable twist numbers (times/10 cm) of the cord and D is a standard fineness (dtex) of the cord.

18. A rubber composit using the polyester cord for reinforcement of rubber mentioned in any of the above 12 to 17.

19. A tire cap ply cord using the polyester cord for reinforcement of rubber mentioned in any of the above 12 to 17.

20. A pneumatic tire using the tire cap ply cord mentioned in the above 11 or 19.

Advantages of the Invention

In accordance with the present invention, there is provided a polyester cord for reinforcement of rubber where heat-resistant adhesive property when exposed to high temperature for long time in a state of being embedded in a rubber composition or under a high-temperature atmosphere is significantly improved, stiffness of the cord is made soft to such a level where there is no problem in terms of practical use in view of anti-fatigue property and also of molding and processing property of the rubber-reinforced product and a high elastic modulus is available and there is also provided a method for manufacturing the same.

Best Mode for Carrying Out the Invention

The present invention will now be illustrated in detail as hereunder.
The polyester fiber material according to the present invention is any of a drawn yarn (gray yarn) prepared by melt spinning of polyethylene terephthalate produced by copolymerization of polyethylene terephthalate or a small amount of the third component, a greige cord prepared by twisting the same and a textile prepared by weaving the same.
The cord according to the present invention is a product where the above-mentioned polyester fiber material is subjected to a treatment for endowing an adhesive property to rubber (hereinafter, it will be referred to as a dipping treatment).

The above-mentioned gray yarn of polyethylene terephthalate comprises a polyester fiber where its surface is activated by an epoxy compound in a stage of non-drawn yarn or drawn yarn as mentioned in Japanese Patent Publication No. 47/049,768 B and it is particularly preferred that said polyethylene terephthalate gray yarn is treated with an epoxy compound having di- or higher polyfunctional epoxy groups during spinning, drawing or after-treating step. Preferred examples of the epoxy compound are polyglycidyl ether compounds of aliphatic polyhydric alcohol such as glycerol polyglycidyl ether, diglycerol polyglycidyl ether, polyglycerol polyglycidyl ether and sorbitol polyglycidyl ether.

It is also preferred that a fiber material treated with an epoxy compound and a hardener is subjected to an aging treatment. The aging is preferred to be carried out at 30°C to 80°c for not shorter than 12 hours. In the case of higher than 80°C, although the adhesion property of the polyester fiber with rubber becomes strong, the treatment is not preferred in view of lowering in strength, hardening of cord, lowering in anti-fatigue property, etc. In the case of lower than 30°C, very long aging time is needed for achieving a sufficient adhesive property and that is not preferred. Aging time depends upon the aging temperature and, in order to achieve a sufficient adhesive characteristic, not shorter than 12 hours is preferred.

In Japanese Patent Laid-Open Nos. 2000/008,280 A and 2000/212,875 A, a treating solution containing a carrier and a treating solution containing an aqueous solution of blocked isocyanate are used as the first treating solutions but the use of the treating solutions as such is not preferred because, although heat resistance becomes very good, cord becomes hard and processing property of the reinforced rubber product becomes bad.

Use of a carrier is not preferred because that promotes invasion of an amine in the rubber composition into the inner area of the fiber whereby deterioration of the fiber is accelerated and strength of cord and anti-fatigue property lower. In addition, the carrier is said to be high in its load to the environment and its use is not preferred when attention is paid to the environment.

Under such circumstances, the present inventors have conducted intensive endeavors and, as a result, it has been found that, in providing an adhesive property to rubber to a polyester fiber material which is previously subjected to an adhesion activating treatment by application of an epoxy compound in a yarn-manufacturing stage or a twisted yarn cord stage, a polyester cord which is soft and has a good adhesive property even after exposed to high temperature is able to be prepared when said polyester fiber material is treated with a treating solution containing the three components of (A) an aqueous solution of a blocked isocyanate, (B) a dispersion of an epoxy resin and (C) a mixed solution of resorcinol-formaldehyde-latex (RFL) by a single-stage treatment or a multi-stage treatment of two or more stages.

Thus, when no carrier is contained in the treating solution, it is now possible to prepare a polyester cord having no problem in terms of anti-fatigue property and, in view of molding and processing property of tire, stiffness of the cord is made soft to such a level where there is no problem in terms of practical use. With regard to the treatment, it is preferred to conduct a single stage treatment in view of the fact that the fiber material is able to be made softer and also in view of the manufacturing cost.

When the ratio by weight of the solids of the blocked isocyanate in the treating solution (A) to the latex component in the treating solution (C) is from 0.20/1 to 1/1 in terms of (blocked isocyanate)/(latex), an excellent heat-resistant adhesive property is able to be achieved. When (blocked isocyanate)/(latex) is from 0.40/1 to 0.80/1, it is more preferred. The effect in the heat-resistant adhesive property as such is due to an improvement in cross-linking of the latex by the isocyanate and, when the amount of the blocked isocyanate component is small, the improving effect for cross-linking is small and a sufficient heat-resistant adhesive property is unable to be ensured. When the latex component is too small, no sufficient initial adhesive property is achieved and, moreover, the treated fiber material becomes hard due to a cross-linking hardening reaction and that is not preferred.

It is further preferred that, in the treating solution, 0.1 to 10 part (s) by weight of (B) the epoxy compound solid is contained in 100 parts by weight of the total solid. When the amount is more than the above range, no good adhesive property is achieved.

Stuck amount of the resin (dip pickup) to the polyester fiber material of the treating solution is preferred to be 5 to 10% by weight. When it is less than 5% by weight, no sufficient initial adhesive property and heat-resistant adhesive property are achieved while, when it is more than 10% by weight, the treated fiber material becomes hard whereby an anti-fatigue property lowers and generation of a refuse upon dipping become abundant and that is not preferred in view of the quality.

As to a treating solution for endowing the adhesive property to the fiber material, (A) blocked isocyanate and (B) a dispersion of epoxy resin are used and, as a result of intensive investigations of the present inventor, an excellent heat-resistant adhesive property is able to be achieved when (A) blocked isocyanate in the treating solution of the present invention is soluble in water and contains at least polymethylene polyphenyl isocyanate where average functional group numbers are three or more or, preferably, not less than four (where bifunctional diphenylmethane diisocyanate may be contained therein). When the isocyanate group is made polyfunctional, the treated fiber material becomes hard as compared with the case where the same amount of the resin is stuck whereby it is suggested that cross-linking density of the resin is improved and, as a result, there is an advantage that, even when the stuck amount of the resin is lowered, an excellent heat-resistant adhesive property is available. When functional numbers are less than three, although stiffness of the treated fiber material is able to be suppressed, cross-linking density of the resin is low whereby no sufficient heat-resistant adhesive property is achieved.

The thermal dissociating temperature of the blocking agent component is preferred to be 100°C to 200°C. Examples of the blocking agent component as such are phenols, lactams and oximes. When the thermal dissociating temperature is lower than 100°C, cross-linking reaction of the isocyanate starts in a drying stage and invasion into the inner area of the fiber becomes non-uniform. On the other hand, when it is higher than 200°C, no sufficient cross-linking reaction is available. Therefore, anyway, the heat-resistant adhesive property lowers.

The action of an improvement in the heat-resistant adhesive property is believed to be as the result where deterioration of the polyester is suppressed due to the fact that invasion and diffusion of the isocyanate into the inner area of the fiber becomes more uniform by the use of a water-soluble blocked isocyanate whereby reactivity with the adhesively activated fiber by the epoxy treatment is improved and a tough and highly heat-resistant adhesive layer is formed, that the isocyanate acts more effectively as a trapping agent for an amine in the rubber composition causing the lowering of a heat-resistant adhesive force and that a resin cross-linking density becomes high by drying at higher temperature than a dissociating temperature whereby a barrier property against invasion of the amine into the inner area of the fiber is improved. That is also suggested by the fact that a strength-retaining rate after over-vulcanization is excellent.

Although there is no particular limitation for (B) the epoxy resin in the treating solution of the present invention, the use of preferably di- or higher polyfunctional epoxy makes the cross-linking density of the resin high to give an excellent heat-resistant adhesive property. Preferred examples of the epoxy compound are polyglycidyl ether compounds of aliphatic polyhydric alcohol such as glycerol polyglycidyl ether, diglycerol polyglycidyl ether, polyglycerol polyglycidyl ether and sorbitol polyglycidyl ether, which show an excellent property.

As to (C) the RFL in the treating solution of the present invention, it is preferred to use a mixed aqueous solution of an initial condensate prepared by the reaction of resorcinol with formaldehyde in the presence of an acid or alkali catalyst and a rubber latex containing the three components comprising vinylpyridine, styrene and butadiene.

With regard to the composition rate (ratio by weight) of vinylpyridine, styrene and butadiene hereinabove, it is preferred to compound them so that the sum of the ratios of vinylpyridine and styrene is made 25% to 55%, the ratio of vinylpyridine is made 5% to 20% and the ratio of butadiene is made 45% to 75%.

In the present invention, when the sum of the ratios of vinylpyridine and styrene is less than 25% or the ratio of vinylpyridine is less than 5%, there is a risk that no excellent heat-resistant adhesive property is available; when the sum of the ratios of vinylpyridine and styrene is more than 55%, there is a risk that the treated fiber material becomes too hard; and, when the ratio of butadiene is less than 45%, there is a risk that, as said ratio becomes less, a co-vulcanizing property to rubber lowers and an adhesive property to rubber lowers.

The rubber latex containing the above-mentioned three components may be such a one where one or more of styrene-butadiene latex, carboxy-modified styrene-butadiene latex, styrene-butadiene-vinylpyridine latex, carboxy-modified styrene-butadiene-vinylpyridine latex, acrylonitrile-butadiene latex, natural rubber, polybutadiene latex, etc. is/are blended.

The mixing rate of the initial condensate of resorcinol with formaldehyde (RF) to the rubber latex (L) in the above-mentioned RFL is preferred to be from 1/2 to 1/15 or, particularly, from 1/4 to 1/12 in terms of ratio by weight of solids. In the present invention, when the ratio by weight of solids of RF to L is less than 1/2, the treated fiber material becomes too hard and, further since a latex component becomes small, an adhesive property to rubber becomes bad and that is not preferred. On the other hand, when it is more than 1/15, an adhesive property becomes bad and, in addition, tackiness of the treated fiber material increases and that is not preferred.

Tenacity of the cord subjected to a dipping treatment is preferably not less than 4.5 cN/dtex and, more preferably, not less than 5.0 cN/dtex. That is essential as a fundamental property for tire cord and, if it is less than the above, that is not suitable in the use as tire cord.

Here, the cord tenacity is a value obtained by dividing the cord strength by the standard fineness in constituting the cord (for example, it is 2,200 dtex in case two gray yarns each being 1,100 dtex are twisted).

The cord tenacity is able to be achieved when a polyester gray yarn of not less than 4.5 cN/dtex obtained by the known method or a twisted yarn thereof is subjected to a dipping treatment. At that time, the twist numbers are preferred to be that a twist coefficient K of the treated cord expressed by the formula $K = T\sqrt{D}$ is not more than 2,500. T in this formula is a cable twist numbers (times/10 cm) of the cord and D is a standard fineness (dtex) of the cord. When the twist coefficient K is more than 2,500, strength lowers and the outcome is not suitable as a tire cap ply cord.

With regard to the dipping treatment, it is preferred to conduct in such a manner that the above-mentioned treating solution is applied to the polyester fiber material, drying is conducted at the temperature of 60°C to 200°C for 30 to 240 seconds and, after that, a thermal treatment is conducted at 180°C to 245°C for 30 to 200 seconds.

As to the evaluation measure for the elastic modulus, elongation upon loading of 2.0 cN/dtex (hereinafter, it will be referred to as an intermediate elongation) is used. The intermediate elongation is preferably not more than 5.0%, more preferably not more than 4.0% and, still more preferably, not more than 3.5%. In a tire cap ply cord, it is a publicly known fact that, when a cord having high elastic modulus is used, a decrease in road noise and an improvement in high-speed driving property of the tire are achieved. When the intermediate elongation is higher than 5.0%, it is not suitable as a tire cap ply cord.

The above-mentioned intermediate elongation of the treated cord is greatly dependent upon the tension of a thermal treatment zone (normalizing zone) of the final stage in the dipping treatment and the normalizing tension is preferably not less than 0.2 cN/dtex, more preferably not less than 0.3 cN/dtex and, still more preferably, not-less than 0.4 cN/dtex. When the normalizing tension is less than 0.2 cN/dtex, it is not possible to prepare an aimed cord having high elastic modulus.

As to a factor contributing in the intermediate elongation, twist numbers of the cord may be listed and the twist coefficient K of the treated cord represented by the formula $K = T\sqrt{D}$ is preferred to be not more than 2,500. When the twist coefficient K is more than 2,500, it is difficult to achieve a high elastic modulus which is necessary for a tire cap ply cord.

It has been found that, when the gurley type cord stiffness of the cord is 30 mN to 90 mN, a polyester cord can be obtained where a heat-resistant adhesive property upon exposure to high temperature for long time in a state of being embedded in the rubber composition or under the high-temperature atmosphere is significantly improved, the anti-fatigue property is good and further cord stiffness is made soft to such a level of having no problem in terms of practical use in view of molding and processing property of the reinforced rubber product. When the cord stiffness is less than 30 mN, no sufficient heat-resistant adhesive property is ensured while, when it is more than 90 mN, the treated fiber material becomes hard and the anti-fatigue property lowers or the molding and processing property becomes bad whereby that is not preferred. As a known method for softening the treated fiber material, there is a method where the treated fiber material is stripped off by contacting to an edge so as to give softness but, according to said method, although softness to some extent is able to be endowed to the treated fiber material, a part of the fiber resin layer is skrived during the softening treatment step whereby there is resulted a disadvantage that uniformity of the sticking of the resin lowers and an adhesive property is lowered. In the present invention, it is possible to prepare a polyester cord which is able to retain the stiffness of a level having no problem in terms of molding, has excellent heat-resistant adhesive property and anti-fatigue property and also has softness even if no softening device is used.

As to an evaluating measure for a heat-resistant adhesive property, a rubber covering rate in a peeling test against adhesion between rubber and cord during over-vulcanization and/or over-heating is used. Generally, when a polyester fiber is exposed to high temperature for long time in rubber, its adhesive force lowers. Such a phenomenon is believed to be due to deterioration of rubber, adhesive (dipped resin), fiber and interfaces thereof. In the conventional polyester fiber, rubber hardly sticks to the cord after adhesive failure whereby failure (destruction) happens in fiber and/or adhesive and interfaces thereof in an earlier stage than the cohesion failure of rubber. On the contrary, in Nylon 66 having an excellent heat-resistant adhesive property, the cord after the adhesion failure is mostly covered by rubber and the destructed site is not in the layer from the fiber to the adhesive but is moved to the side of the rubber. From the viewpoint as such, it is now possible to judge the degree of the heat-resistant adhesive property by evaluating the rubber covering rate.

In the use as tire and/or industrial material using polyester cord for reinforcement of rubber, it is necessary that rubber covering rate after the initial vulcanization is not less than 90% and rubber covering rate after over-vulcanization is not less than 80% under any of an ambient temperature atmosphere and a high-temperature atmosphere of 100°C to 150°C. If the rates are less than the above, the product is not suitable for the use where a heat-resistant adhesive property is needed.

Said polyester cord of the present invention prepared as above is an epoch-making product such as that a heat-resistant adhesive property when exposed to high temperature for long time in a state of being embedded in a rubber composition or under a high-temperature atmosphere where rubber covering rate is a representative evaluating measure is significantly improved and that stiffness of the treated cord in view of anti-fatigue property and molding and processing property of reinforced rubber product is improved to such an extent that there is no problem in practical use. Thus, said cord is suitable for the use as a rubber composit and a tire cap ply cord.

Further, a polyester cord prepared by the treatment where the tension in the thermal treating zone (normalizing zone) in the final stage of the dipping treatment is made not less than 0.2 cN/dtex also has a high elastic modulus which is suitable for the use as a tire cap ply. Thus, said cord is suitable not only for a rubber composit but also for a tire cap ply cord used in the outer layer part of the belt of a radial tire among the pneumatic tires.

Examples

The present invention will now be more specifically illustrated by way of the following Examples although the present invention is not limited thereto. Each of physical data is measured by the following methods.

Strength and elongation: In accordance with JIS-L 1017 8.5 (2002), strength and elongation were measured by a tensile tester after being allowed to stand for not shorter than 24 hours in a constant-temperature chamber where temperature and humidity were controlled at 20°C and 65% RH, respectively.

Fineness: In accordance with JIS-L 1017 8.3 (2002), fineness was measured after being allowed to stand for not shorter than 24 hours in a constant-temperature chamber where temperature and humidity were controlled at 20°C and 65% RH, respectively.

Cord stiffness: Evaluation was conducted by a gurley method which is a method A according to JIS-L 1096 8.20.1. A load of 25 g was applied to the position of 5.08 cm below the fulcrum of pendulum of a gurley type stiffness tester. A sample where cord length was 3.81 cm was attached to a chuck of a movable arm (length between the chuck and the free end of the pendulum was 2.54 cm), the movable arm was driven and the cord stiffness was calculated from the following formula where RG is a graduation when the sample was separated from the free end of the pendulum.

$$\text{Cord Stiffness (mN)} = \text{RG} \times 0.969 \; / \; \text{Cord Gauge (cm)}$$

Peeling strength against adhesion: Measurement was conducted by a method where "a peeling test for cloth and vulcanized rubber" in JIS-K 6256 5. (1999) was improved. A test piece as shown in Fig. 1 in which treated cord and rubber for tire were layered was prepared (thickness and width of rubber of peeling surface between cord and cord were

7

0. 7 mm and 25 mm, respectively and cord pick was 33) and, after vulcanization was conducted at 140°C for 40 minutes (initial stage) or at 170°C for 60 minutes (over-vulcanization), upper and lower parts of the cut of the test piece (a and b in Fig. 1) were pinched at ambient temperature and the force required for peeling by a tensile tester at 50 mm/minute was expressed in terms of N/25 mm. Further, the test piece was subjected to a heating treatment in an oven at 150°C for 10 minutes and the peeling force was similarly measured under said atmosphere (at a heated state). After the test, the rubber covering rate of the cord at the peeled surface was evaluated by naked eye. When the cord was completely covered by rubber, the covering rate was defined as 100% while the case where no rubber was stuck at all was defined as 0%.

Pulling-out strength against adhesion: An evaluation was conducted by an H test where a T test (method A) in the Attachment 1 3.1 (2002) of JIS-L 1017 was modified was used. The treated cord was embedded in the rubber for tire in the length of 1 cm and, after vulcanization at 140°C for 40 minutes (initial stage) or at 170°C for 60 minutes (over-vulcanization), the force required for pulling out the cord from the rubber at ambient temperature at 300 mm/minute was expressed in terms of N/cm.

Deterioration of strength in rubber: The treated cord was embedded in rubber for tire and, after vulcanization at 170°C for 180 minutes, the cord was taken out from the rubber, a breaking strength after the vulcanization was measured and the retaining rate to the state before vulcanization was adopted.

Anti-fatigue property of disk: Evaluation was conducted according to the disk fatigue strength (Goodrich method) of the Attachment 1 2.2.2 (2002) of JIS-L 1017. Two treated cords were embedded in the rubber for tire and vulcanized at 140°C for 40 minutes to prepare a rubber composite. The test piece was applied with deformation of 2,600 cycles/minute for 72 hours where one cycle comprised 12.5% of compression and 6.3% of elongation, the cords were then taken out from the rubber, breaking strength after fatigue was measured and the retaining rate thereof before and after said fatigue test was adopted.

Anti-fatigue property of tube: Evaluation was conducted by a tube fatigue strength (Goodyear method) of the Attachment 1 2.2.1 (2002) of JIS-L 1017. A tester for elongation and compression fatigue was used, a test piece in a tube form made of rubber where the test piece was embedded in parallel to the axis was bent in 80° and attached thereto, inner pressure of 0.34 MPa was applied thereto using a compressed air, rotation was conducted at 850 rpm and the time until the tube was broken by elongation and compression fatigue was adopted.

[Example 1]

A polyethylene terephthalate chip having an intrinsic viscosity of 0.95 dl/g was subjected to a melt discharge from a spinning nozzle having 190 pores at the spinning temperature of 300°C, passed through a heating region of 320°C, cooled and solidified by cool air of 20°C, pulled out at a spinning speed of 550 m/minute and then drawn to a draw ratio of 5.8-fold and sorbitol polyglycidyl ether which is an epoxy compound is applied thereto followed by relaxing to an extent of 3.0% and winding. The gray yarn of polyethylene terephthalate prepared as such in 1,100 dtex and 190 filaments (intrinsic viscosity: 0.88 dl/g; tenacity: 8.3 cN/dtex) was subjected to an aging treatment at 70°C for 48 hours and two yarns were twisted to prepare a greige cord where twist numbers were 47 x 47 (t/10 cm). The cord was dipped in a second treating solution (corresponding to the treating solution (2) in Table 5) and the cord stuck with the treating solution was squeezed using a squeezing roll where the pressure was adjusted to remove an excessive solution. The cord endowed with the treating solution was then dried in an oven of 120°C for 56 seconds where a stretching rate of 4.0% was applied to the cord endowed with the treating solution and then subjected to a heating treatment in an oven of 235°C for 45 seconds. A hot stretch tension at that time was 11.0 N/cord (0.50 cN/dtex).

After that, it was dried in an oven of 120°C for 56 seconds together with application of a relax rate of -2.0% and then subjected to a heating treatment in an oven of 235°C for 45 seconds. A normalizing tension at that time was 5.6 N/cord (0.25 cN/dtex). Composition of the second treating solution used in Example 1 is shown in Table 1. As to a latex, a chemical C (solid: 41%) where the ratio by weight of vinylpyridine/styrene/butadiene was 12/18/70 and a chemical D (solid content: 49%) where the ratio by weight of styrene/butadiene was 50/50 were mixed and used.

[Example 2]

In the second treating solution of Example 1, the chemical A was changed to a chemical A' (a water-soluble blocked isocyanate where numbers of functional group were about 3). Except the above, the same dipping treatment as in Example 1 was conducted.

[Example 3]

In Example 1, the second treating solution shown in Table 1 was changed so that the ratio by weight of solids in blocked isocyanate/latex was made 0.24/1. Except the above, the same dipping treatment as in Example 1 was conducted.

[Example 4]

In Example 1, the second treating solution shown in Table 1 was changed so that the ratio by weight of solids in blocked isocyanate/latex was made 1/1. Except the above, the same dipping treatment as in Example 1 was conducted.

[Example 5]

In Example 1, a second treating solution where a chemical E (solid content: 40%) in which the ratio by weight of vinylpyridine/styrene/butadiene was 15/15/70 was used and the liquid concentration was made as shown in Table 1 by adjusting the amount of water was used instead of the latex shown in Table 1 (a mixture of chemicals C and D). Except the above, the same dipping treatment as in Example 1 was conducted.

[Example 6]

In Example 1, a second treating solution where a chemical E' (solid content: 38%) in which the ratio by weight of vinylpyridine/styrene/butadiene was 15/35/50 was used and the liquid concentration was made as shown in Table 1 by adjusting the amount of water was used instead of the latex shown in Table 1 (a mixture of chemicals C and D). Except the above, the same dipping treatment as in Example 1 was conducted.

[Comparative Example 1]

In Example 1, a polyethylene terephthalate gray yarn (intrinsic viscosity: 0.88 dl/g; tenacity: 8.3 cN/dtex) of 1,100 dtex and 190 filaments prepared by the known method where the gray yarn was not subjected to a surface activation with an epoxy compound was used and, except the above, the same dipping treatment as in Example 1 was conducted.

[Comparative Example 2]

A second treating solution shown in Table 2 as a representative example of an RFL formulation containing neither blocked isocyanate nor epoxy was used and, except the above, the same dipping treatment as in Example 1 was conducted.

[Comparative Example 3]

A second treating solution shown in Table 3 as a representative example of a carrier+RFL formulation containing neither blocked isocyanate nor epoxy was used and, except the above, the same dipping treatment as in-Example 1 was conducted.

[Comparative Example 4]

The same gray yarn as in Example 1 was used, a treating solution shown in Table 4 was used as the first treating solution (corresponding to the treating solution (1) in Table 5), then a treating solution shown in Table 1 was endowed to the cord as the second treating solution and, except the above, the same dipping treatment as in Example 1 was conducted.

[Comparative Example 5]

In a treating solution of Example 1, with regard to a blocked isocyanate in the second treating solution, diphenylmethane bis-4,4'-carbamoyl ε-caprolactam (solid content: 29%) was used as a water-dispersible blocked isocyanate and, except the above, the same dipping treatment as in Example 1 was conducted. Total sticking rate of the resin to the treated cord was 7.9% by weight.

Treating conditions and properties of the cords in Examples 1 to 6 and Comparative Examples 1 to 5 are shown in Table 5. In Examples 1 to 6 of the present invention, a heat-resistant adhesive property was significantly improved as compared with Comparative Example 1 where a gray yarn where no surface activation was conducted by an epoxy compound was used, Comparative Examples 2 and 3 where no blocked isocyanate was compounded and Comparative Example 5 where a dispersible isocyanate was used.

It is also noted that, as compared with Comparative Example 4 which is a conventional example, stiffness of the cord was significantly soft and also that there was a significant improvement in an anti-fatigue property being able to be evaluated by strength-retaining rate after disk fatigue and anti-fatigue property of tube.

[Example 7]

In the treatment of Example 1, relax rate upon drying and heating treatments after applying the second treating solution was changed to -1.0%. Its normalizing tension at that time was 8.1 N/cord (0.37 cN/dtex). Except the above, the same dipping treatment as in Example 1 was conducted.

[Example 8]

In the treatment of Example 1, relax rate upon drying and heating treatments after applying the second treating solution was changed to 0%. Its normalizing tension at that time was 10.6 N/cord (0.48 cN/dtex). Except the above, the same dipping treatment as in Example 1 was conducted.

[Example 9]

In the treatment of Example 1, a greige cord where twist numbers were 33 x 33 (t/10 cm) was used and relax rate upon drying and heating treatments after applying the second treating solution was changed to 0%. Its normalizing tension at that time was 14.1 N/cord (0. 64 cN/dtex). Except the above, the same dipping treatment as in Example 1 was conducted.

[Comparative Example 6]

In the treatment of Example 1, relax rate upon drying and heating treatments after applying the second treating solution was changed to -4.0%. Its normalizing tension at that time was 3.5 N/cord (0.16 cN/dtex). Except the above, the same dipping treatment as in Example 1 was conducted.

[Comparative Example 7]

In the treatment of Example 9, relax rate upon drying and heating treatments after applying the second treating solution was changed to -6.0%. Its normalizing tension at that time was 3.1 N/cord (0.14 cN/dtex). Except the above, the same dipping treatment as in Example 9 was conducted.

Twist numbers, dipping conditions and properties of the treated cords of Examples 1 and 7 to 9 and Comparative Examples 6 and 7 are shown in Table 6.
As a result of comparisons among Examples 1, 7 and 8, it is noted that, when a normalizing tension is made high, an intermediate elongation lowers or, in other words, high elastic modulus is resulted.
In Example 9, twist numbers are lowered whereby the normalizing tension under the same relaxing condition rises and the intermediate elongation further lowers.
In Comparative Examples 6 and 7, the normalizing tension was low and, as a result, the intermediate elongation rose and elastic modulus was insufficient.
[Table 1]

| Treating Solution for Example 1 | | | | |
|---|---|---|---|---|
| | | | Part(s) by Wt | Solids in Part(s) by Wt |
| RFL | aged at 25°C for 6 hrs | NaOH (12%) | 8.5 | 1.0 |
| | | Formalin (37%) | 23.6 | 8.8 |
| | | Resorcinol | 12.8 | 12.8 |
| | | Water | 295.9 | - |
| | aged at 25°C | Latex (chemical C) | 388.5 | 157.3 |
| | | Latex (Chemical D) | 132.8 | 65.1 |

(continued)

| Treating Solution for Example 1 | | | | |
|---|---|---|---|---|
| | | | Part(s) by Wt | Solids in Part(s) by Wt |
| | for 20 hrs | Ammonia (28%) | 17.9 | 5.0 |
| | | Water | 120.0 | - |
| Total | | | 1000.0 | 250.0 |
| Treating Solutions | | Aq soln of isocyanate (chemical A) | 237.2 | 71.2 |
| | | Dispersion of epoxy resin (chemical B) | 6.4 | 6.3 |
| | | Water | 266.5 | - |
| | | RFL solution (25%) | 489.9 | 122.5 |
| Total | | | 1000.0 | 200.0 |
| Chemical A: Elastron BN-27 manufactured by Daiichi Kogyo Seiyaku KK (blocked polyurethane prepolymer; solid content: 30%; functional group numbers: ca. 5) Chemical B: Denakol EX-614 manufactured by Nagase Chemtex KK (sorbitol polyglycidyl ether) Chemical C: SNX-7046 manufactured by Nippon A&L KK (copolymer of styrene, butadiene and 2-vinylpyridine; solid content: 41% (ratio by weight of vinylpyridine/styrene/butadiene = 12/18/70)) Chemical D: J-9049 manufactured by Nippon A&L KK (copolymer of styrene and butadiene; solid content: 49% (ratio by weight of styrene/butadiene = 50/50)) | | | | |

[Table 2]

| Treating Solution for Comparative Example 2 | | | | |
|---|---|---|---|---|
| | | | Part(s) by Wt | Solids in Part(s) by Wt |
| RFL | aged at 25°C for 20 hrs | NaOH (10%) | 21.0 | 2.1 |
| | | Formalin (37%) | 23.6 | 8.8 |
| | | Resorcinol | 26.8 | 26.8 |
| | | Water | 522.8 | - |
| | | Latex (chemical E) | 405.8 | 162.3 |
| Total | | | 1000.0 | 200.0 |
| Chemical E: Nipol 2518GL manufactured by Nippon Zeon KK (copolymer of styrene, butadiene and 2-vinylpyridine; solid content: 40% (ratio by weight of vinylpyridine/styrene/butadiene = 15/15/70)) | | | | |

[Table 3]

| Treating Solution for Comparative Example 3 | | | | |
|---|---|---|---|---|
| | | | Part(s) by Wt | Solids in Part(s) by Wt |
| RFL | aged at 25°C for 20 hrs | NaOH (10%) | 21.0 | 2.1 |
| | | Formalin (37%) | 23.6 | 8.8 |
| | | Resorcinol | 26.8 | 26.8 |
| | | Water | 522.8 | |
| | | Latex (chemical E) | 405.8 | 162.3 |

(continued)

| Treating Solution for Comparative Example 3 | | Part(s) by Wt | Solids in Part(s) by Wt |
|---|---|---|---|
| Total | | 1000.0 | 200.0 |
| Treating Solutions | Carrier (chemical F) | 285.7 | 57.1 |
| | RFL | 714.3 | 142.9 |
| Total | | 1000.0 | 200.0 |
| Chemical E: Nipol 2518GL manufactured by Nippon Zeon KK (copolymer of styrene, butadiene and 2-vinylpyridine; solid content: 40% (ratio by weight of vinylpyridine/styrene/butadiene = 15/15/70))<br>Chemical F: Denabond manufactured by Nagase Chemtex KK (aqueous ammonium solution of chlorophenol and a condensate of resorcinol with formalin; solid content: 20%) | | | |

[Table 4]

| First Treating Solution for Comparative Example 4 | | Part(s) by Wt | Solids in Part(s) by Wt |
|---|---|---|---|
| First Treating Solutions | Carrier (chemical F) | 25.0 | 5.0 |
| | Aq soln of isocyanate (chemical A) | 225.0 | 68.0 |
| | Water | 750.0 | - |
| Total | | 1000.0 | 73.0 |
| Chemical A: Elastron BN-27 manufactured by Daiichi Kogyo Seiyaku KK (blocked polyurethane prepolymer; solid content: 30%; functional group numbers: ca. 5)<br>Chemical F: Denabond manufactured by Nagase Chemtex KK (aqueous ammonium solution of chlorophenol and a condensate of resorcinol with formalin; solid content: 20%) | | | |

[Table 5]

| Treating Conditions | | | | Example 1 | Example 2 | Example 3 | Example 4 | Example 5 | Example 6 | Comp. Example 1 | Comp. Example 2 | Comp. Example 3 | Comp. Example 4 | Comp. Example 5 |
|---|---|---|---|---|---|---|---|---|---|---|---|---|---|---|
| Grey Yem | Epoxy Surface Activity of Gray Yam | | - | present | present | present | present | present | present | absent | present | present | present | present |
| Treating Solution (1) | Mixed Solution of Carrier Isocyanate | | - | absent | absent | absent | absent | absent | absent | absent | absent | absent | present | absent |
| Treating Solution (2) | Carder | | - | absent | absent | absent | absent | absent | absent | absent | absent | present | absent | absent |
| | Isocyanate | Aqueous Type | - | water-soluble | water-soluble | water-soluble | water-soluble | water-soluble | water-soluble | water-soluble | absent | absent | water-soluble | dispersible |
| | | Functional Group Numbers | - | 5 | 3 | 5 | 5 | 5 | 5 | 5 | | | 5 | 2 |
| | | Dissociating Temperature | °C | 180 | 120 | 180 | 180 | 180 | 180 | 180 | | | 180 | 90 |
| | Epoxy | | - | present | present | present | present | present | present | present | absent | absent | present | present |
| | RFL | | - | present | present | present | present | present | present | present | present | present | present | present |
| Ratio by Weight of Solids in Blocked Isocyanate/Latex | | | % | 0.64 | 0.64 | 0.24 | 1.00 | 0.64 | 0.64 | 0.64 | - | - | 1.09 | 0.64 |
| Latex Composition (Ratio by Weight) | Vinylpyridine+Styrene | | % | 28 | 28 | 28 | 28 | 30 | 50 | 28 | 30 | 30 | 28 | 28 |
| | Vinylpyridine | | % | 9 | 9 | 9 | 9 | 15 | 15 | 9 | 15 | 15 | 9 | 9 |
| | Butadiene | | % | 63 | 63 | 63 | 63 | 70 | 50 | 63 | 70 | 70 | 63 | 63 |

Treating Solution (1): refer to Table 4
Treating Solution (2): refer to Tables 1, 2 and 3

EP 1 854 917 A1

13

| Properties of Treated Cords | | | | | | | | | | | | | | |
|---|---|---|---|---|---|---|---|---|---|---|---|---|---|---|
| Dip Pickup | | | % | 7.0 | 6.1 | 6.8 | 8.0 | 7.1 | 6.9 | 7.2 | 7.3 | 7.5 | 7.1 | 7.9 |
| Gurley Type Cord Stiffness | | | mN | 58 | 31 | 45 | 80 | 58 | 63 | 31 | 22 | 27 | 156 | 58 |
| Cord Gauge | | | cm | 0.055 | 0.055 | 0.055 | 0.055 | 0.055 | 0.055 | 0.055 | 0.055 | 0.055 | 0.055 | 0.055 |
| RG | | | - | 1.3 | 0.7 | 1.0 | 1.8 | 1.3 | 1.4 | 0.7 | 0.5 | 0.8 | 3.5 | 1.3 |
| Strength | | | N | 142 | 145 | 144 | 139 | 139 | 138 | 143 | 149 | 147 | 125 | 141 |
| Peeling Strength against Adhesion | | Initial Stage | N/25mm | 235 | 231 | 240 | 225 | 238 | 225 | 203 | 125 | 133 | 230 | 193 |
| | | Rubber Covering Rate | % | 100 | 100 | 100 | 100 | 100 | 100 | 95 | 75 | 80 | 100 | 85 |
| | | Over-Vulcanization | N/25mm | 210 | 195 | 198 | 220 | 218 | 225 | 153 | 95 | 105 | 201 | 170 |
| | | Rubber Covering Rate | % | 95 | 85 | 90 | 100 | 95 | 95 | 75 | 10 | 10 | 90 | 50 |
| | | Initial Stage and upon Heating | N/25mm | 135 | 128 | 139 | 125 | 136 | 126 | 102 | 51 | 64 | 131 | 111 |
| | | Rubber Covering Rete | % | 100 | 90 | 95 | 100 | 100 | 100 | 75 | 50 | 65 | 100 | 70 |
| | | Over-Vulcanization and upon Heating | N/25mm | 120 | 115 | 110 | 123 | 121 | 125 | 80 | 30 | 30 | 120 | 89 |
| | | Rubber Covering Rate | % | 90 | 80 | 85 | 95 | 90 | 95 | 55 | 5 | 5 | 90 | 30 |
| Pulling-Out Strength against Adhesion | | Initial Stage | N/cm | 122 | 114 | 128 | 121 | 122 | 119 | 100 | 101 | 124 | 120 | 105 |
| | | Over-Vulcanization | N/cm | 120 | 110 | 116 | 121 | 120 | 118 | 75 | 55 | 62 | 120 | 97 |
| Deterioration Strength-Retaining Rate in Rubber | | | % | 85 | 83 | 84 | 84 | 85 | 86 | 69 | 8 | 11 | 87 | 71 |
| Strength-Retaining Rate after Disk Fatigue | | | % | 91 | 93 | 95 | 90 | 91 | 90 | 90 | 95 | 93 | 51 | 89 |
| Anti-Fatigue Property of Tube | | | min | 268 | 279 | 275 | 238 | 264 | 259 | 305 | 312 | 326 | 40 | 204 |

[Table 6]

EP 1 854 917 A1

Twist Numbers, Dipping Treatment Conditions and Properties of Treated Cords

| | | | Example 1 | Example 7 | Example 8 | Example 9 | Example 5 | Comp. Example 6 | Comp. Example 7 |
|---|---|---|---|---|---|---|---|---|---|
| Cord Constitution | | | 1100dtex/2 | | | | | | |
| Twist Numbers (ply twist/cable twist) | | t/10cm | 47 × 47 | 47 × 47 | 47 × 47 | 33 × 33 | 47 × 47 | 47 × 47 | 33 × 33 |
| Twist Coefficient | | - | 2204 | 2204 | 2204 | 1548 | 2204 | 2204 | 1548 |
| Dipping Treatment | Treatment in First Stage | Stretching Rate | % | 4.0 | 4.0 | 4.0 | 4.0 | 4.0 | 4.0 | 4.0 |
| | | Hot Stretch Tension | cN/dtex | 0.50 | 0.50 | 0.50 | 0.70 | 0.50 | 0.50 | 0.70 |
| | Treatment in Second Stage | Stretching Rate | % | −2.0 | −1.0 | 0.0 | 0.0 | 0.0 | −4.0 | −6.0 |
| | | Normalizing Tension | cN/dtex | 0.25 | 0.37 | 0.48 | 0.64 | 0.48 | 0.16 | 0.14 |
| Properties of Treated Cords | Strength | | N | 142 | 143 | 144 | 150 | 144 | 141 | 151 |
| | Tenacity | | cN/dtex | 6.5 | 6.5 | 6.5 | 6.8 | 6.5 | 6.4 | 6.9 |
| | Intermediate Elongation | | % | 4.2 | 3.8 | 3.5 | 2.9 | 3.5 | 5.4 | 5.1 |
| | Breaking Elongation | | % | 13.4 | 12.7 | 12.1 | 10.4 | 12.0 | 15.4 | 14.2 |
| | Pulling-Out Strength against Adhesion | Initial Stage | N/cm | 122 | 122 | 122 | 136 | 123 | 120 | 140 |
| | | Over-Vulcanization | N/cm | 120 | 121 | 123 | 132 | 121 | 119 | 130 |
| | Peeling Strength against Adhesion | Initial Stage and Ambient Temperature | N/25mm | 235 | 225 | 226 | 228 | 230 | 234 | 221 |
| | | Rubber Covering Rate | % | 100 | 100 | 100 | 100 | 100 | 100 | 100 |
| | | Over-Vulcanization and Ambient Temperature | N/25mm | 210 | 202 | 197 | 190 | 215 | 203 | 200 |
| | | Rubber Covering Rate | % | 95 | 90 | 90 | 90 | 100 | 90 | 90 |
| | | Initial Stage and upon Heating | N/25mm | 135 | 129 | 130 | 127 | 140 | 130 | 128 |
| | | Rubber Covering Rate | % | 100 | 100 | 100 | 100 | 100 | 100 | 100 |
| | | Over-Vulcanization and upon Heating | N/25mm | 120 | 119 | 115 | 114 | 125 | 121 | 118 |
| | | Rubber Covering Rate | % | 90 | 85 | 85 | 85 | 95 | 90 | 90 |
| | Deterioration in Rubber | Strength Retaining Rate | % | 85 | 84 | 83 | 85 | 85 | 82 | 81 |
| | Dip Pickup | | % | 7.0 | 7.1 | 7.3 | 7.0 | 7.2 | 7.2 | 7.3 |

Industrial Applicability

In accordance with the present invention, it is now possible to provide a polyester cord for reinforcement of rubber where a heat-resistant adhesive property when exposed to high temperature for long time in a state of being embedded in a rubber composition or under a high-temperature atmosphere is significantly improved, stiffness of the cord is improved to such a level which is no problem in terms of practical use in view of anti-fatigue property and also of molding and processing property of the rubber-reinforced product and a high elastic modulus is available and also to provide a method for manufacturing the same. It is able to be utilized in a broad range of rubber product uses such as tire, hose, conveyer belt, V-belt, power transmission belt and rubber container and it is particularly able to be utilized in tire cap ply cord which has been in a tendency of an increasing demand in recent years whereby it greatly contributes in industry.

**Claims**

1.  A method for the manufacture of a polyester cord for reinforcement of rubber, **characterized in that**, a polyester fiber material where an epoxy compound is previously applied in a stage of non-drawn yarn or drawn yarn or in a stage of twisted yarn cord so that an adhesively activated treatment is conducted is treated with a treating solution containing the three components of (A) an aqueous solution of blocked isocyanate, (B) a dispersion of epoxy resin and (C) resorcinol-formaldehyde-latex (RFL) mixed liquid by a single-stage treatment or a multi-stage treatment of two or more stages whereby adhesive property to rubber is endowed to said polyester fiber material.

2.  The method for the manufacture of a polyester cord for reinforcement of rubber according to claim 1, wherein the ratio by weight of solids of blocked isocyanate/latex in the above treating solution is from 0.20/1 to 1/1.

3.  The method for the manufacture of a polyester cord for reinforcement of rubber according to claim 1 or 2, wherein (A) aqueous solution of blocked isocyanate is an aqueous solution at least containing tri- or higher polyfunctional polymethylene polyphenyl isocyanate.

4.  The method for the manufacture of a polyester cord for reinforcement of rubber according to any of claims 1 to 3, wherein, in said (A) blocked isocyanate, a thermal dissociation temperature of the blocking agent component is 100°C to 200°C.

5.  The method for the manufacture of a polyester cord for reinforcement of rubber according to any of claims 1 to 4, wherein a latex component in said (C) resorcinol-formaldehyde-latex (RFL) mixed liquid contains three components of vinylpyridine, styrene and butadiene and they are compounded in such a composition rate (ratio by weight) that sum of the ratios of vinylpyridine and styrene is 25% to 55%, the ratio of vinylpyridine is 5% to 20% and the ratio of butadiene is 45% to 75%.

6.  The method for the manufacture of a polyester cord for reinforcement of rubber according to any of claims 1 to 5, wherein the polyester fiber material is a fiber material where a polyethylene terephthalate fiber treated with an epoxy compound having di- or higher polyfunctional epoxy group in a spinning, drawing or after-treating step is used.

7.  The method for the manufacture of a polyester cord for reinforcement of rubber according to any of claims 1 to 6, wherein, after said polyester fiber material is treated with a treating solution containing the three components of (A) an aqueous solution of blocked isocyanate, (B) a dispersion of epoxy resin and (C) a resorcinol-formaldehyde-latex (RFL) mixed liquid by a single-stage treatment or a multi-stage treatment of two or more stages, it is subjected to a thermal treatment under a normalizing tension adjusted to not less than 0.2 cN/dtex.

8.  The method for the manufacture of a polyester cord for reinforcement of rubber according to claim 7, wherein the normalizing tension is not less than 0.3 cN/dtex.

9.  The method for the manufacture of a polyester cord for reinforcement of rubber according to claim 7, wherein the normalizing tension is not less than 0.4 cN/dtex.

10. A rubber composit using the polyester cord for reinforcement of rubber manufactured by the method mentioned in any of claims 1 to 9.

11. A tire cap ply cord using the polyester cord for reinforcement of rubber manufactured by the method mentioned in any of claims 1 to 9.

12. A polyester cord for reinforcement of rubber manufactured by the method mentioned in any of claims 1 to 9 in which gurley type cord stiffness is 30 mN to 90 mN, rubber covering rate after the initial vulcanization in a peeling strength test against adhesion at ambient temperature is not less than 90% and rubber covering rate after over-vulcanization is not less than 80% in a peeling strength test against adhesion at ambient temperature.

13. A polyester cord for reinforcement of rubber manufactured by the method mentioned in any of claims 1 to 9 in which gurley type cord stiffness is 30 mN to 90 mN, rubber covering rate after the initial vulcanization in a peeling strength test against adhesion upon heating under the atmosphere of 150°C is not less than 90% and rubber covering rate after over-vulcanization is not less than 80% in a peeling strength test against adhesion upon heating under the atmosphere of 150°C.

14. The polyester cord for reinforcement of rubber according to claim 12 or 13, wherein the tenacity is not less than 4.5 cN/dtex and elongation upon loading of 2.0 cN/dtex is not more than 5.0%.

15. The polyester cord for reinforcement of rubber according to claim 14, wherein the elongation upon loading of 2.0 cN/dtex is not more than 4.0%.

16. The polyester cord for reinforcement of rubber according to claim 14, wherein the elongation upon loading of 2.0 cN/dtex is not more than 3.5%.

17. The polyester cord for reinforcement of rubber according to any of claims 12 to 16, wherein a twist coefficient K of the cord expressed by $K = T\sqrt{D}$ is not more than 2,500, in which T is cable twist numbers (times/10 cm) of the cord and D is a standard fineness (dtex) of the cord.

18. A rubber composit using the polyester cord for reinforcement of rubber mentioned in any of claims 12 to 17.

19. A tire cap ply cord using the polyester cord for reinforcement of rubber mentioned in any of claims 12 to 17.

20. A pneumatic tire using the tire cap ply cord mentioned in claim 11 or 19.

[Figure 1]

test piece for a peeling
strength test against
adhesion

2) cord

3) peeled surface cut

2) cord

area (a)

area (b)

1) rubber for tire

peeling direction

25mm width and 33 cord pick

<table>
<tr><td colspan="2" align="center">INTERNATIONAL SEARCH REPORT</td><td>International application No.<br>PCT/JP2006/303852</td></tr>
</table>

| | | |
|---|---|---|
| | INTERNATIONAL SEARCH REPORT | International application No.<br>PCT/JP2006/303852 |

A. CLASSIFICATION OF SUBJECT MATTER
*D06M15/55*(2006.01), *B60C9/00*(2006.01), *D01F11/08*(2006.01), *D02G3/48*
(2006.01), *D06M13/395*(2006.01), *D06M15/72*(2006.01), *D06M15/41*(2006.01),
*D06M15/693*(2006.01), *D06M101/32*(2006.01)
According to International Patent Classification (IPC) or to both national classification and IPC

B. FIELDS SEARCHED

Minimum documentation searched (classification system followed by classification symbols)
D06M13/00-15/72, *B60C9/00*(2006.01), D01F11/00-11/16, D02G3/48

Documentation searched other than minimum documentation to the extent that such documents are included in the fields searched
Jitsuyo Shinan Koho          1922-1996    Jitsuyo Shinan Toroku Koho   1996-2006
Kokai Jitsuyo Shinan Koho    1971-2006    Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>A | JP 60-31950 B2  (Toyobo Petto Kodo Kabushiki Kaisha),<br>25 July, 1985 (25.07.85),<br>Claims 1, 7; column 12, lines 16 to 31,<br>comparative example 2<br>(Family: none) | 1-3,5,6,<br>10-13,17-20<br>4,7-9,14-16 |
| A | JP 9-132817 A  (Teijin Ltd.),<br>20 May, 1997 (20.05.97),<br>Claim 1; Par. No. [0022]<br>(Family: none) | 1-20 |
| A | JP 9-241975 A  (The Yokohama Rubber Co., Ltd.),<br>16 September, 1997 (16.09.97),<br>Claim 1; Par. No. [0021]<br>(Family: none) | 1-20 |

[X] Further documents are listed in the continuation of Box C.          [ ] See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>09 May, 2006 (09.05.06) | Date of mailing of the international search report<br>06 June, 2006 (06.06.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2006/303852

C (Continuation).   DOCUMENTS CONSIDERED TO BE RELEVANT

| Category* | Citation of document, with indication, where appropriate, of the relevant passages | Relevant to claim No. |
|---|---|---|
| P,A | JP 2006-2327 A  (Toyobo Co., Ltd.),<br>05 January, 2006 (05.01.06),<br>Claims 1 to 13<br>(Family: none) | 1-20 |
| A | JP 2000-8280 A  (Toyobo Co., Ltd.),<br>11 January, 2000 (11.01.00),<br>Claims 1 to 5<br>(Family: none) | 1-20 |
| A | JP 2003-306872 A  (Toyobo Co., Ltd.),<br>31 October, 2003 (31.10.03),<br>Claims 1 to 6<br>& US 2003-198794 A1     & DE 10317738 A | 1-20 |
| A | JP 11-34182 A  (The Yokohama Rubber Co., Ltd.),<br>09 February, 1999 (09.02.99),<br>Claim 1<br>(Family: none) | 1-20 |
| A | JP 4-11077 A  (Nippon Shokubai Kagaku Kogyo<br>Co., Ltd.),<br>16 January, 1992 (16.01.92),<br>Claim 1<br>(Family: none) | 1-20 |
| A | JP 61-42545 A  (Teijin Ltd.),<br>01 March, 1986 (01.03.86),<br>Claim 1<br>(Family: none) | 1-20 |
| A | JP 51-70394 A  (Toray Industries, Inc.),<br>17 June, 1976 (17.06.76),<br>Claim 1<br>(Family: none) | 1-20 |

Form PCT/ISA/210 (continuation of second sheet) (April 2005)

**REFERENCES CITED IN THE DESCRIPTION**

**Patent documents cited in the description**

- JP 51070394 A
- JP 60031950 B
- JP 2000008280 A
- JP 2000212875 A
- JP 59124407 A
- JP 47049768 B